# EUROPEAN PATENT APPLICATION

(11) **EP 4 023 613 A1**
(43) Date of publication of application: **06.07.2022**
(21) Application number: 21218274.5
(22) Date of filing: 30.12.2021
(51) Int. Cl.: C02F 11/10, C02F 11/122, C02F 11/18

(54) **SLUDGE TREATMENT PLANT AND METHOD**

(30) Priority: 31.12.2020 IT 202000032966
(71) Applicant: Sites S.r.l. Societa' Impianti Termici Elettrici E Strumentali, 22070 Fenegro' (CO) (IT)
(72) Inventor: DELL'ACQUA, Vittorio, 22070 FENEGRO' (CO) (IT)
(74) Representative: Robba, Pierpaolo

(57) **Abstract**

Sludge treatment plant (10) comprising: a first treatment station (100) having an inlet for the sludge coming from a source (50), said first station comprising at least one hydrothermal carbonization reactor (101) provided with an inlet (101a) for the sludge (50) and comprising a first tube (110) for the circulation of liquid, a second tube (120) for the circulation of said sludge (50), and a set of rotary blades (130), and a filtration unit having an inlet for the sludge (Fi) coming from said reactor (101), said filtration unit comprising filtration means (105) for the separation of said sludge (Fi) into a solid fraction (Fs), a liquid fraction (Fl) and a gaseous fraction (Fg) and having respective outlets (112, 113, 114) for said fractions (Fs, Fl, Fg); wherein said plant comprises a second treatment station (200) or molecular dissociation station, comprising at least one reactor (201) having corresponding inlets (203, 205) for said solid fraction (Fs) and said gaseous fraction (Fg) obtained from the treatment in the first station (100), respectively, and an outlet (245) for a mixture of gases (Gu) obtained from the treatment performed by said reactor (201), wherein said inlet for said solid fraction (Fs) is arranged proximal to a first end (201a) of the reactor (201), and wherein said inlet (205) for the gaseous fraction (Fg) is arranged distal to said first end (201a) of the reaction (201) in such a way as to define a path for the solid fraction (Fs) in co-current with a gaseous fraction obtained from the dissociation of said solid fraction (Fs), wherein said reactor (201) comprises a gas feeding system (209) having respective inlets (209a, 209b) for feeding gases (G1, G2, G3) to the reactor (201), a gas distribution system (211) associated with said gas feeding system (209) and having mixing means (215) for mixing said gases (G1, G2, G3) with said solid fraction (Fs), first breaking means (291) and second breaking means (231) comprising grids (221, 233; 223, 235) and heat storage means (225, 237) for performing a treatment of gasification of the molecules of the solid fraction (Fs). The invention further relates to a sludge treatment method.

## Description

### Technical Field

The present invention relates to a sludge treatment plant and method. More particularly, the present invention relates to a plant and a method for treating sludge coming from wastewater treatment plants and/or wet organic waste, which allows the valorization of the components of said sludge in order to obtain so-called renewable fuels such as, for example, liquid methane, or alternatively hydrogen gas.

### Prior Art

In the technical field of sanitary engineering, plants for treating urban, agro-food or industrial wastewater are known, whose main function is to purify waste produced by human activity, by removing undesired contaminants, which are concentrated in the form of sludge.

Wastewater sludge is thus the fraction of solid matter, contained in wastewater, which is removed in wastewater treatment plants by means of various purification treatments of mechanical, biological and chemical nature, necessary to make water clarified and compatible with its reintroduction in nature without causing damages to the ecosystem of the receiving body (lands, lakes, seas, rivers).

The sludge coming from the purification cycles is often contaminated by toxic substances and usually contains high amounts of moisture. Therefore, this sludge too must undergo a set of treatments, necessary to make it suitable for disposal, for example in special landfills, or for being re-used, as such or after composting, in agriculture. Such treatments are also aimed at reducing the amounts of water contained, with consequent volume reduction, at stabilizing the organic material as well as at destroying present pathogens.

Purification sludge thus represents waste deriving from the purification process carried out in said plants, with consequent problems related to the disposal and/or recovery thereof.

Concerning the problem of sludge disposal, at present the sludge produced by purification plants can be subjected to a dehydration process in order to reduce the amounts of water contained and facilitate subsequent operations of treatment and disposal. Disposal can be carried out by incineration or in controlled landfills for special waste, or, as sludge usually has good contents of organic substances and plant fertility elements, it can also be recycled in agriculture by spreading it as such onto the soil intended for agricultural use, or in composting plants for subsequent use in agriculture.

Alternatively, sludge can be subjected to a heat drying treatment, in which the sludge is brought to a high temperature by means of the heat conveyed by a hot fluid, such as steam or diathermic oil, which is brought into contact with the sludge.

Such disposal modes for the sludge produced by depuration plants are particularly disadvantageous, both because of operating costs, due to the high costs required for the transport of sludge and the disposal thereof in suitable landfills, and for reasons of environmental protection, because of the known polluting effects of the contaminants contained in the sludge and liberated into the atmosphere.

An object of the present invention is therefore to overcome the drawbacks of prior art, by providing a plant for treating sludge produced by purification plants and/or by plants of digestion of wet organic waste, which allows valorization of the components contained in said sludge.

A further object of the invention is to provide a sludge treatment plants which allows to recover the substances contained in sludge, in order to obtain so-called renewable fuels, such as, for example liquid methane or biomethane, or alternatively to obtain gaseous hydrogen.

Another object of the invention is to provide a sludge treatment plant that can operate with low energy consumption and reduced environmental impact.

Not least object of the invention is to provide a plant for treating sludge produced by purification plants and/or by plants of digestion of organic waste that can be manufactured industrially at low cost.

These and other objects are achieved with the sludge treatment plant as claimed in the appended claims.

### Summary of the Invention

For ease of description, hereafter reference will mainly be made to the most preferred embodiment in which the matter treated by the plant according to the invention is mainly represented by wastewater sludge. However, the plant according to the invention is also apt for treating other matters, containing a certain percentage of wet matter and a certain percentage of dry matter, such as, for example, sludge coming from plants for the digestion of organic waste.

The invention relates to a plant for treating depuration sludge, more particularly for treating sludge produced by plants for the purification of wastewater, as well as to a method of operation thereof.

The sludge treatment plant according to the invention can be arranged downstream of known purification plants, or downstream of known plants for the digestion of organic waste, in order to treat the sludge produced by said plants, or it can be used autonomously and receive amounts of sludge to be treated, without the need for it to be associated with any purification plant or digestion plant.

The plant according to the invention comprises a set of stations connected to one another in series, in which an amount of sludge is subjected to a series of treatments adapted to valorize the components contained in said sludge, such as, for example, carbon dioxide (CO2), ammonia, phosphorus, zinc and other metals, and to obtain so-called renewable fuels, such as, for example, liquid methane or alternatively gaseous hydrogen.

The sludge treatment plant is associated with a source of wastewater sludge. The source of wastewater sludge may comprise one or more storage tanks for storing sludge or, when the plant according to the invention is arranged downstream of known purification plants, the sludge source may be directly the outlet provided for the sludge in said plants. Preferably, the sludge coming from the sludge source have a moisture or contained water content of about 75% by weight of the total amount of sludge.

The plant further comprises a first treatment station, or dehydration station, comprising a HydroThermal Carbonization (HTC) reactor, in which the sludge coming from the sludge source is subjected to a thermochemical treatment under temperature and pressure conditions favorable for said treatment and in the presence of liquid water. Preferably, the temperature inside the reactor is lower than 200°C and the pressure is lower than 20 bar. The sludge is treated inside the reactor for a time varying from 1 to 3 hours. More preferably, the sludge is subjected to said hydrothermal carbonization treatment for at least 3 hours, at a temperature of 200°C and a pressure of 20 bar.

Advantageously, the dehydration station further comprises a filtration unit arranged downstream of the hydrothermal carbonization reactor and associated with said reactor by means of adjustment members for adjusting the flow of sludge treated by the reactor.

The filtration unit comprises filtration means for separating the sludge coming from the hydrothermal carbonization reactor into a solid fraction, a liquid fraction and a gaseous fraction, and is provided with corresponding outlets for said solid, liquid and gaseous fractions. Preferably, the gaseous fraction recovered from the filtration of the sludge will be a small amount, preferably lower than 5%. The filtration unit further comprises adjustment members, such as, for example, valves, associated with the outlets provided for the liquid fraction and the solid fraction in order to adjust the flow of said fractions. The solid fraction obtained from filtration is a carbonaceous matter, preferably in the form of pellets, whereas the liquid fraction is an aqueous residue rich in the substances contained in the wastewater sludge, such as, for example, carbon dioxide (CO2), ammonia, phosphorus, zinc and other metals. Preferably, the filtration unit operates at a temperature do about 200°C and a pressure of about 20 bar. Both the solid fraction and the gaseous fraction will be sent to a subsequent treatment station.

More preferably, the solid fraction will consist of a solid component represented by about 75% of the amount of sludge exiting said station and a moisture component represented by about the remaining part of the amount of sludge, i.e. about 25%. Preferably, the gaseous fraction will consist essentially of carbon dioxide CO₂, carbon monoxide CO, methane CH₄ and hydrogen H₂.

Advantageously, according to the invention, the sludge treatment plant comprises a second treatment station or molecular dissociation station arranged downstream of the first treatment station or dehydration station and adapted to receive the solid fraction and the gaseous fraction of the sludge, recovered from filtration of the sludge coming from the first treatment station or dehydration station. Advantageously, the second treatment comprises devices, such as reactors or the like, which allow carrying out a process of molecular dissociation of the solid and gaseous fractions, recovered from filtration, of the sludge coming from the dehydration station.

The second treatment station or molecular dissociation station comprises at least one reactor provided with corresponding inlets for the solid fraction and gaseous fraction, respectively, recovered from filtration of the sludge, said reactor being adapted to carry out at least two treatment stages, namely a first stage for the solid fraction and a second stage for the gaseous fraction deriving from dissociation of the solid fraction of the sludge.

At the first treatment stage of the reactor of the molecular dissociation station, according to the invention, the solid fraction produced by the first treatment station or dehydration station is turned into gaseous phase by mixing the solid phase with certain feed gases for the reactor. Furthermore, still at this first treatment stage, a first dissociation of the complex gaseous molecules into simple molecules obtained from the transformation of the solid fraction into gaseous phase takes place. Preferably, the temperature inside the reactor at this first stage is between 700°C and 800°C, more preferably the temperature is 750°C.

The reactor of the molecular dissociation station comprises a check valve for varying the thickness of the solid fraction entering the reactor. Preferably, the check valve is a gate valve, more preferably a knife gate valve made of steel and having adjustable frequency in order to vary the thickness of the solid fraction.

Advantageously, the path of the solid fraction inside the reactor of the molecular dissociation station is from top to bottom, i.e. from a first, upper end of the reactor to a second, lower end of the reactor, in order to define a path of the solid fraction in co-current with the gaseous fraction, by exploiting the force of gravity. To this aim, preferably the reactor of the molecular dissociation station is a vertical axis reactor, more preferably having a cylindrical shape.

The reactor of the molecular dissociation station further comprises a gas feeding system comprising a plurality of inlets for feeding gases to the reactor, such as carbon dioxide CO₂, oxygen O₂ and water H₂O in the form of vapor or mixtures thereof.

The reactor of the molecular dissociation station further comprises a gas distribution system associated with the feeding system for the gases entering the reactor in order to distribute the gases inside the reactor. Preferably, both the gas feeding system and the distribution system for distributing the gases inside the reactor are arranged close to the upper end of said reactor.

Preferably, the gas distribution system comprises at least one movable, especially rotary agitator or mixer, driven by a corresponding electric motor and equipped with mixing means adapted to mix the gases coming from the gas feed system with the solid fraction of the sludge entering the reactor. More preferably, the mixing means comprise a plurality of first arms, distributed in an axial direction on the body of the agitator or mixer and extending radially relative to the body of the agitator or mixer.

Advantageously, the first arms of the movable agitator are arranged in a sunburst pattern, offset relative to one another in order to define a plurality of reaction layers associated with the inlets of the gas feeding system. Preferably, the first arms and the body of the agitator are hollow in order to allow the gases to flow thereinto.

The gas distribution system further comprises a plurality of second, stationary arms arranged at different levels, each level being provided with a corresponding inlet for the gases coming from the gas feeding system. Preferably, the second, stationary arms are arranged offset relative to the first arms of the movable agitator.

Preferably, the percentages of the gases entering the reactor, in particular the percentages of gases entering the stationary arms, vary according to the temperature and the reaction to be obtained in each reaction layer. More preferably, in at least one of the reaction layers, the reaction C + CO₂ = 2CO is promoted, allowing an increase in the porosity of the residual carbon of the solid fraction, in order to obtain a catalyst for the dissociation of the complex gaseous molecules deriving from the mixing carried out by the agitator.

Preferably, the percentages of the gases entering the movable agitator, in particular entering the first arms, will be uniform.

In addition, each arm of the movable agitator is preferably inclined relative to a corresponding radial plane perpendicular to the body of the agitator for facilitating traveling of the solid fraction downwards.

The first, movable arms and the second, stationary arms of the agitator further comprise openings for the exit of gases. Preferably, the openings are oriented downwards, i.e. towards the lower end of the molecular dissociation reactor.

The agitator or mixer further comprises means for adjusting the rotation speed in order to prevent areas of accumulation of the solid fraction and obtain an optimal mixture from the mixing of the solid fraction with the gases entering the reactor.

The molecular dissociation reactor further comprises first breaking means for breaking the carbonaceous particles of the solid fraction that have not been gasified at the first treatment stage. Preferably, the first breaking means are arranged under the agitator.

Preferably, the first breaking means comprise first grids comprising at least one mobile grid and at least one stationary grid. More preferably, the fixed grid has a mesh size of about 5 mm and is surmounted by first heat storage means comprising a plurality of first iron spherical beads having a diameter between 25 mm and 35 mm, preferably of 30 mm, in order to allow the passage of particles smaller than 5 mm. The mobile grid is adapted to break the carbonaceous particles of the solid fraction that have not been gasified yet, by moving the first spherical beads at predetermined time intervals in order to obtain breakage of the carbonaceous particles having a size larger than 5 mm. Preferably, the first spherical beads are arranged in layers on the fixed grid. More preferably, the overall thickness of the layers of first spherical beads is sized so as to obtain, as a result of the movement of the mobile grid, optimal stirring and breakage of the carbonaceous matter, and even more preferably, said thickness is between 50 mm and 70 mm.

At the second treatment stage of the molecular dissociation station, the dissociation of the residual chains deriving from the first treatment stage takes place in the presence of catalyst elements, such as for example the carbon particles exiting the first grids. Preferably, the reaction temperature at this second treatment stage is between 800°C and 900°C, more preferably of about 850°C.

In order to carry out the dissociation of the residual chains at the second treatment stage, the reactor of the molecular dissociation station comprises an inlet for introducing gases necessary for reaction, such as oxygen O₂ and water H₂O in the form of vapor. In addition, the reactor comprises a corresponding inlet for the gaseous fraction recovered as a result of filtration of the sludge within the dehydration station. The gaseous fraction coming from the dehydration station consists of carbon dioxide CO₂ in a proportion of 75% and the remaining part of 25% consists of carbon monoxide CO, methane CH₄, and hydrogen H₂.

The reactor of the molecular dissociation station comprises second breaking means preferably arranged lower than the inlets provided in the reactor for introducing the gases for the reaction of the second treatment stage.

The second breaking means comprise second grids comprising at least one mobile grid and one fixed grid. Preferably, the fixed grid has a mesh size of about 3 mm to allow passage of particles smaller than 3 mm. In addition, the fixed grid is surmounted by second heat storage means comprising a plurality of second iron spherical beads having a diameter between 70 mm and 90 mm, more preferably of 80 mm, for allowing passage of particles smaller than 3 mm. The mobile grid is adapted to move the second spherical beads in order to obtain breakage of the particles of inert gases agglomerated at the second treatment stage and having a size larger than 3 mm.

The reactor of the molecular dissociation station further comprises a system of purification of the gases exiting the second treatment stage for separating gases from ashes. Preferably, the purification system comprises a plurality of cyclones located close to the lower end of the reactor. The reactor is further provided with an outlet for the ashes coming from the purification operation performed by the cyclones as well as with a collector intended for collecting the ashes and preferably located at the lower end of the reactor.

In order to ensure proper operation of the sludge treatment plant, the mixture of gases exiting the molecular dissociation station must be clean in a proportion of about 99%. To this aim, the molecular dissociation station comprises a sub-station or finishing station for the mixture of gases exiting the molecular dissociation station. Preferably, the mixture of gases exiting the molecular dissociation station consists of carbon monoxide CO, carbon dioxide CO₂, hydrogen H₂ and water H₂O in the form of vapor.

Preferably, the finishing station comprises a settling chamber inside which homogenization of the mixture of gases coming from the molecular dissociation station as well as finishing of the reaction times takes place. More preferably, the finishing station comprises one or more dissociation reactors inside which the dissociation of complex molecules takes place by using alumina-based catalysts operating at a temperature between 800°C e 900°C, more preferably at a temperature of about 850°C.

The sludge treatment plant further comprises a third treatment station or balancing station comprising balancing reactors allowing control of the ratio between the hydrogen H₂ and carbon monoxide CO components contained in said mixture of gases subjected to the finishing treatment. Preferably, the operation of the balancing station is based on the use of water H₂O vapor according to the water-gas shift reaction, or Dussan reaction, or "wgs" reaction: CO + H₂O = H₂ + CO₂ which allows obtaining hydrogen H₂ and carbon dioxide CO₂.

Preferably, the balancing station comprises a first balancing reactor inside which a first balancing stage takes place, said first balancing reactor operating at a temperature between 330°C and 400°C, by using a ferrochromium-based catalyst, free of hexavalent chromium.

The balancing station further comprises a second balancing reactor, inside which control of the ratio between hydrogen and carbon monoxide takes place by using a copper, zinc and alumina-based catalyst and the temperature is lowered by means of a heat exchanger, until it reaches 180°C e 250°C.

The balancing station further comprises detection means arranged at the entry of the first balancing reactor and at the exit of the second balancing reactor for the treated mixture of gases. The detection means are capable of detecting parameters relating to the gases contained in said mixture, such as carbon monoxide, carbon dioxide, hydrogen and water. The detection means cooperate with an analyzing device configured to process the parameters detected by said detection means and transmit control signals for adjusting and/or varying the flow rates of the gases entering the first balancing reactor, the temperature at the exit of the first and second stage of the molecular dissociation reactor.

When the plant according to the invention is used for obtaining liquid methane from sludge treatment, the balancing station performs control of the ratio between carbon monoxide and hydrogen in order to promote the methanation reaction.

When the plant according to the invention is used for obtaining gaseous hydrogen from sludge treatment, the function of the balancing station is to minimize the presence of carbon monoxide and maximize the formation of CO₂. At the end of said operation, a percentage of gaseous hydrogen containing impurities lower than 10% of the obtained hydrogen is also obtained.

The sludge treatment plant further comprises a fifth treatment station or separation station arranged in series downstream of the balancing station, said fifth treatment station being adapted to receive the mixture of gases deriving from the balancing station, in order to separate the component CO₂ with known means in order to obtain a mixture of gases essentially consisting only of carbon monoxide and hydrogen.

Once separated, the carbon dioxide CO₂ component can be subjected to a liquefaction step by means of known systems and means.

Depending on the use of the plant, i.e. either for obtaining liquid methane or for obtaining gaseous hydrogen, the plant comprises a series of stations arranged downstream of the station for the separation of the carbon dioxide component.

The stations of the plant when said plant is used for obtaining liquid methane are described below.

Advantageously, when the plant according to the invention is used to obtain liquid methane or biomethane, the plant comprises a sixth treatment station or methanation station comprising at least one methanation reactor inside which methane in gaseous form is obtained following separation of the carbon dioxide component. Preferably, the obtainment of methane in the form of gas inside the methanation reactor is based on the exothermic Sabatier reaction: CO + 3H₂ = CH₄ + 2H₂O.

According to the invention, the methanation reactor comprises a plurality of heat exchangers. More preferably, the heat exchangers comprise finned tubes extending longitudinally from a first end towards a second end of the methanation reactor. More preferably, the heat transfer exchange medium inside the heat exchangers is water H₂O.

The methanation reactor further comprises a feeding system for feeding the heat exchange medium to the plurality of heat exchangers. Preferably, the feeding system comprises an annular collector provided at a lower end of the methanation reactor. Furthermore, the feeding system comprises adjusting means, such as, for example, valves, for adjusting the flow rate of the heat exchange medium at the inlet of the heat exchangers.

Preferably, the pressure inside the methanation reactor is between 8 bar and 12 bar, more preferably of about 10 bar.

Preferably, the reaction takes place from bottom to top of the methanation reactor when said reactor is in its operating configuration in the plant. More preferably, the methanation reactor is a vertical axis reactor, even more preferably having a cylindrical shape.

More preferably, the reaction inside the methanation reactor takes place in two steps:
- a first step taking place in the lower part of the reactor in the presence of a first catalyst based on nickel alumina and rare metals and operating at a temperature of about250°C;
- a second step following the first step and taking place in the upper part of the reactor in the presence of a second catalyst, also based on nickel alumina and rare metals, said second catalyst operating at a temperature of about 450°C.

The methanation reactor further comprises detection means or sensors, preferably arranged in the upper part of the reactor, for detecting parameters relating to the temperature of the heat exchange medium at the exit from the reactor and for transmitting a control signal to the heat exchange medium flow rate adjusting means provided in the lower part of the reactor, to adjust the flow rate of the heat exchange medium entering the reactor.

The methanation reactor preferably comprises two outlets, namely a first outlet for a mixture of gases consisting of methane CH₄ and water H₂O in the form of vapor, and a second outlet for overheated vapor.

The methane contained in said mixture will subsequently be subjected to a liquefaction process by means of known systems and means. The overheated vapor exiting the second outlet will be subjected to a further overheating process by means of suitable heat exchangers.

The stations of the plant when said plant is used for obtaining gaseous hydrogen are described below.

Advantageously, when the plant according to the invention is used for obtaining gaseous hydrogen, the sixth treatment station is a purification station for purifying the hydrogen component containing a percentage of about 10% of impurities, which is obtained at the exit from the station of separation of the carbon dioxide component. The impurities present in the hydrogen flow are: carbon dioxide CO₂, methane CH₄, oxygen O₂, carbon monoxide CO, water vapor H₂O and nitrogen N₂.

Preferably, the separation of impurities from the hydrogen flow takes place in several stages. For this purpose, the purification station comprises:
- a first filtration zone for separating traces of water vapor and carbon dioxide by using molecular sieves;
- a demister, in which methane, oxygen, carbon monoxide and nitrogen are separated in liquid form, wherein upstream of the inlet of the demister, the hydrogen flow with impurities is subjected to a series of cooling steps, by means of appropriate heat exchangers arranged in cascade, until it reaches a temperature of about -180°C with subsequent liquefaction of the removed polluting gases or impurities;
- a second filtration zone, arranged downstream of the demister, for the remaining traces of impurities, which are separated by absorption on activated carbon filters and silica gel packed beds.

After the removal of impurities, the pure hydrogen is stored in high pressure cylinders.

Preferably, for each cooling step the plant comprises a safety system against overpressures caused by possible stops or malfunctions of the plant. The safety system is made with known means and systems.

### Brief Description of the Drawings

A preferred embodiment of the invention will be described by way of non-limiting example with reference to the annexed Figures, in which:
- Fig. 1 shows a block diagram of a plant according to a first embodiment of the invention;
- Fig. 2 shows a detailed layout of a first and second station of the plant;
- Fig. 3 shows in detail the filtration unit of the plant of Fig. 1;
- Figs. 4A-4D show the filtration unit of Fig. 3 in corresponding operating configurations;
- Fig. 5 shows the molecular dissociation station of the plant of Fig. 1;
- Figs. 6A-6D show a detail of the molecular dissociation station of Fig. 5;
- Figs. 7A-7C show the methanation station of the plant of Fig. 1;

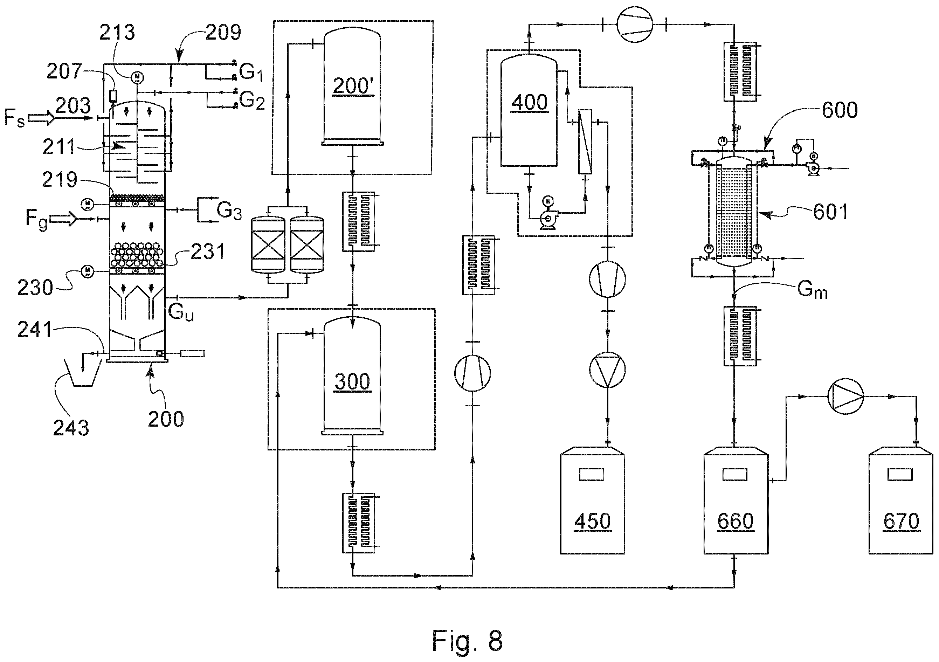

- Fig. 8 shows a detailed layout of the plant of Fig. 1;
- Fig. 9 shows a block diagram of the plant according to a second embodiment of the invention;
- Fig. 10 shows a detailed layout of a station of the plant of Fig. 8.

### Description of Some Preferred Embodiments of the Invention

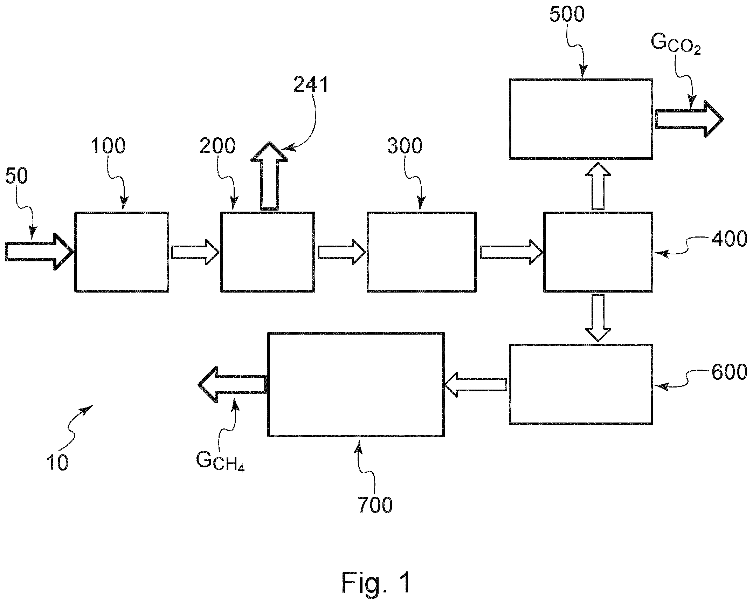

Referring to Fig. 1, there is illustrated a block diagram of a sludge treatment plant according to a first preferred embodiment of the invention, which has been indicated as a whole with reference numeral 10. In the illustrated embodiment, the plant 10 according to the invention is used for obtaining liquid methane or biomethane from sludge treatment. In the following description, the method for treating sludge by means of the plant 10 according to the invention will also be described.

The sludge treatment plant 10 according to the invention comprises a set of stations connected to one another in series, in which sludge is subjected to various treatments for valorizing the components contained in said sludge.

In the illustrated embodiment, the sludge treatment plant 10 according to the invention comprises:
- a first treatment station 100 or dehydration station arranged to perform filtration of incoming sludge 50 in order to obtain a solid fraction Fs and a gaseous fraction Fg of the sludge;
- a second treatment station 200 or molecular dissociation station, in which the solid fraction Fs and the gaseous fraction Fg of the sludge are subjected to a treatment of dissociation of molecules or gasification treatment;
- a third treatment station 300 or balancing station, which allows control of the ratio between the hydrogen H₂ and carbon monoxide CO components contained in the mixture of gases exiting the second treatment station 200;
- a fourth treatment station 400 or separation station for separating the CO₂ component contained in the mixture of gases obtained at the exit from the balancing station 300;
- possibly a fifth treatment station 500 for liquefying the CO₂ component;
- a sixth treatment station 600 or methanation station for obtaining gaseous methane from the mixture of gases obtained from the separation of CO₂.

The sludge treatment plant 10 is associated with a source of sludge 50. The sludge may be wastewater sludge or sludge resulting from the anaerobic digestion of agricultural by-products, livestock manure, sewage, crops or from the organic fraction of urban waste coming from the separate collection of waste.

According to the illustrated embodiment, the source of sludge 50 comprises one or more storage tanks for storing sludge. In the illustrated embodiment, the sludge coming from the source of sludge 50 have a content of moisture of about 75% of the total amount of sludge.

In other embodiments of the invention, the source of sludge may directly consist of the sludge outlet provided in sludge treatment plants when the plant according to the invention is arranged downstream of known sludge treatment plants.

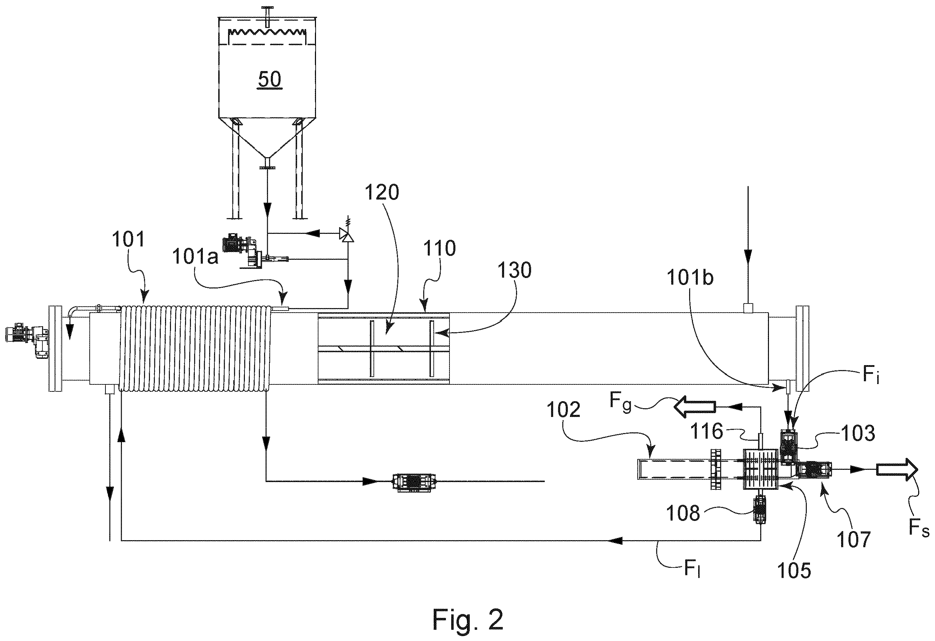

Referring to Fig. 2, there is illustrated the first treatment station 100. The first treatment station or dehydration station 100 comprises a HydroThermal Carbonization (HTC) reactor 101, having an inlet 101a for the sludge 50, in which the sludge coming from the source of sludge 50 is subjected to a thermochemical treatment under temperature and pressure conditions favorable for said treatment and in the presence of liquid water. In the illustrated embodiment, the sludge is subjected to said hydrothermal carbonization treatment for at least 3 hours, at a temperature of 200°C and a pressure of 20 bar.

The hydrothermal carbonization reactor 101 comprises a first, outer tube 110 for the circulation of a liquid, such as, for example, water, a second, inner tube 120 intended for the circulation of the sludge 50 and preferably arranged inside the first tube 110, and a set of rotary blades 130, preferably arranged inside the second tube 120. In addition, the hydrothermal carbonization reactor 101 has an outlet 101b for the sludge treated inside said reactor 101.

The first treatment station 100 further comprises a filtration unit 102 arranged downstream of the hydrothermal carbonization reactor 101 and associated with the outlet 101b of said reactor by means of adjusting members 103 for adjusting the flow of the sludge treated by the reactor 101. In the illustrated embodiment, the filtration unit 102 is a mechanical press or filter press, comprising filtration means 105 to retain the solid fraction Fs of the sludge Fi entering said filtration unit 102 and allow passage of the liquid fraction Fl that is recirculated. In particular, the liquid fraction Fl is sent to the hydrothermal carbonization reactor 101. The solid fraction Fs obtained from filtration is a carbonaceous matter, whereas the liquid fraction Fl is an aqueous residue rich in the substances contained in the sludge Fi, such as, for example, carbon dioxide (CO₂), ammonia, phosphorous, zinc and other metals.

At the outlet of the filtration unit 102 there are provided flow adjusting members 107, 108, such as, for example, valves, both for the exit of the solid fraction Fs and for the exit of the liquid fraction Fl that are obtained from the sludge dehydration treatment. In the illustrated embodiment, the filtration unit 102 operates at a temperature of about 200°C and a pressure of about 20 bar.

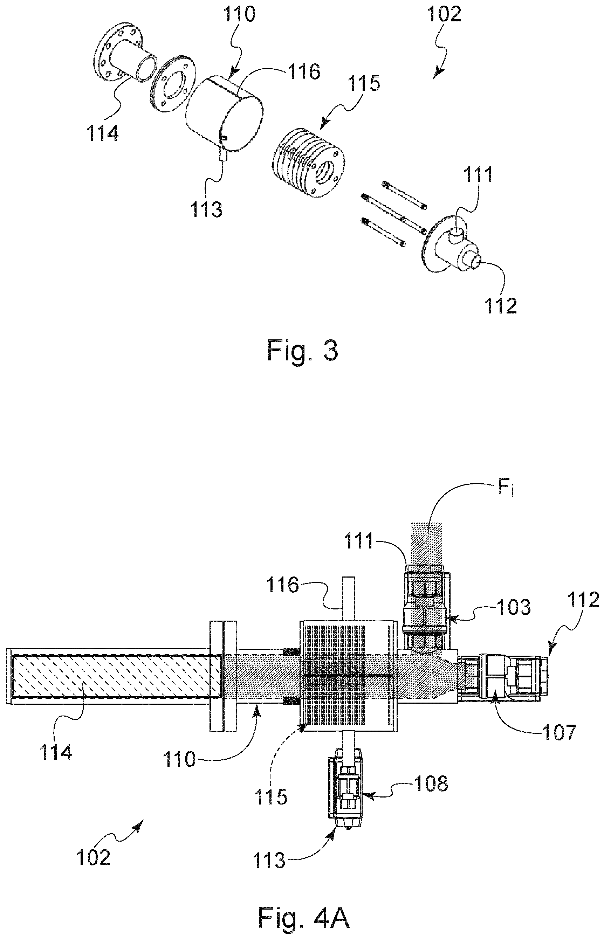

Referring to Fig. 3, there is illustrated the filtration unit 102 or filter press comprising a main body 110 having an inlet 111 for the amount of sludge Fi coming from the hydrothermal carbonization reactor 101. The flow rate of the sludge entering the filter press 102 is adjusted by means of a valve 103. The filter press 102 further comprises a first, second and third outlet 112, 113, 116 for the solid fraction Fs, liquid fraction Fl and gaseous fraction Fg, respectively, obtained from the filtration of the sludge Fi entering the filter press 102. Filtration means 105, such as a thrust piston 114 and a plurality of stainless steel lamellas 115, are housed inside the body 110 of the filter press 102.

Referring to Figs. 4A-4D, the operation of the filter press 102 will briefly be described therein. The sludge Fi coming from the hydrothermal carbonization reactor enters the filter press 102 through the inlet 111. At this stage, the valve 103 associated with the inlet 111 is open in order to allow entry of the sludge Fi, whereas the valves 107, 108 associated with the first and second outlets 112, 133, respectively, of the filter press 102 for exit of the solid fraction Fs and the liquid fraction Fl of the sludge are closed. At this first stage, shown in Fig. 4A, the piston 114 is in an initial retracted position. In the illustrated embodiment, the piston 114 is slidable along a direction substantially perpendicular to the direction of entry of the sludge Fi into the filter press 102 and advances in order to perform dehydration of the amount of sludge Fi.

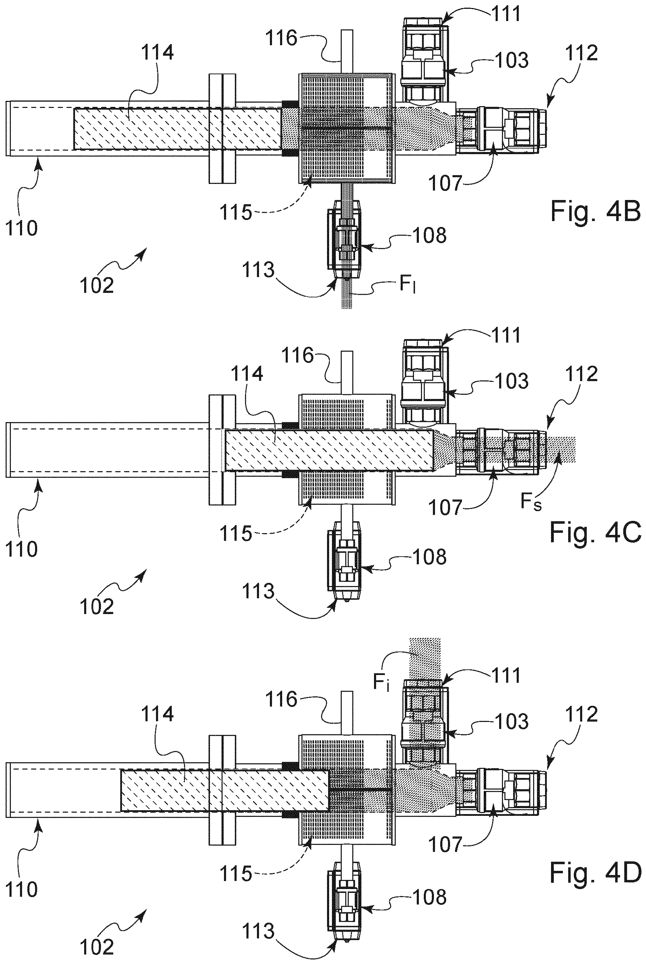

After a certain amount of sludge Fi has entered the body 110 of the filter press 102, the valve 103 associated with the inlet 111 for the sludge Fi is closed and the valve 108 associated with the second outlet 113 of the filter press 102, i.e. the outlet for the liquid fraction Fl contained in the sludge Fi, is opened. At this second stage, shown in Fig. 4B, the piston 114 advances and pushes the amount of sludge Fi against the lamellas 115 carrying out the separation of the liquid fraction Fl contained in the sludge Fi. The liquid fraction Fl exits through the second outlet 113 of the filter press 102 and is recirculated, being sent to the hydrothermal carbonization reactor 101. At this stage, both the valve 103 arranged at the inlet 111 for the sludge Fi and the valve 107 arranged at the first outlet 112 for the solid fraction Fs of the sludge are closed.

After the stage of separation of the liquid fraction FI, the valve 108 is closed and the valve 107 arranged at the first outlet 112 of the filter press 102 for the exit of the solid fraction Fs obtained from the separation of the liquid fraction Fl from the sludge is opened. At this third stage, shown in Fig. 4C, the valve 103 arranged at the inlet 111 also remains closed. The piston 114 continues to advance and by means of its travel it pushes the solid fraction Fs towards the first outlet 112, through which the solid fraction Fs exits the filter press 102.

After having removed the solid fraction Fs from the filter press 102, the piston 114 will be in an advanced, end-of-stroke position in which the end adapted to come into contact with the sludge Fi during the pressing operation is essentially in the direction of the flow of sludge Fi entering the filter press 102. At this fourth stage, shown in Fig. 4D, the valve 107 for the exit of the solid fraction Fs of the sludge is closed and the valve 103 located at the inlet 111 for the sludge Fi is opened in order to allow entry of a fresh amount of sludge to be treated. The flow of the fresh amount of sludge Fi to be treated entering the filter press 102, when coming into contact with the end of the piston 114 that is in the direction of said flow, moves the piston 114 backwards to its initial position and the dehydration process is repeated.

Upon its exit from the dehydration station 100, the sludge will have a solid fraction Fs, preferably in the form of pellets, and a gaseous fraction Fg, which fractions will be sent to the second treatment station 200 or molecular dissociation station.

In the illustrated embodiment, the solid fraction Fs will consist of a dry component represented by about 75% of the sludge exiting said station 100 and a moisture component represented by about the remaining part of the amount of the solid fraction Fs, i.e. about 25%. The gaseous fraction Fg will essentially consist of carbon dioxide CO₂, carbon monoxide CO, methane CH₄ and hydrogen H₂.

The second treatment station 200 or molecular dissociation station arranged downstream of the first treatment station is adapted to receive the solid fraction Fs and the gaseous fraction Fg of the sludge coming from the first treatment station or dehydration station 100 to carry out a process of molecular dissociation of the solid fraction Fs and gaseous fraction Fg.

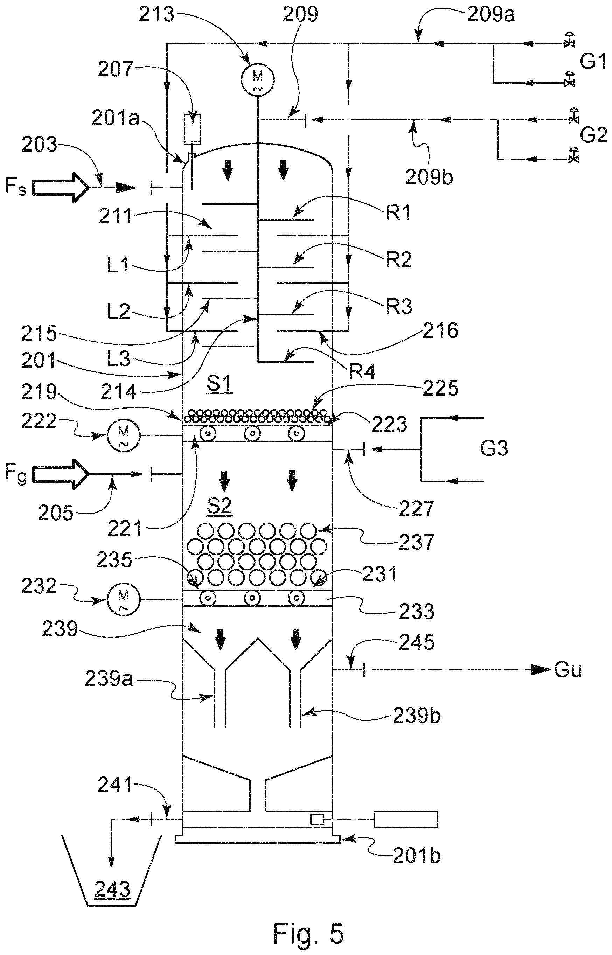

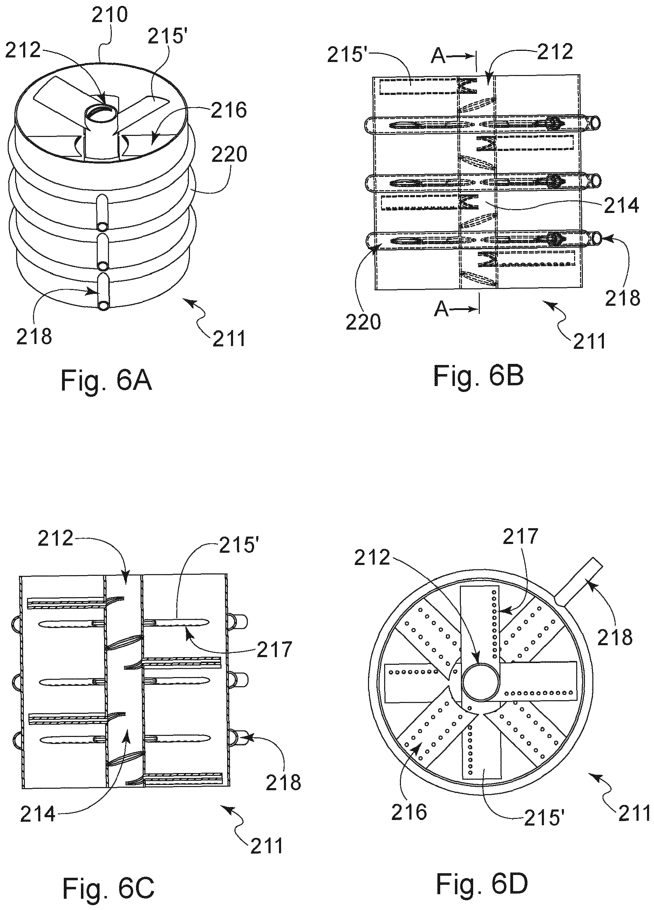

Referring to Figs. 5 and 6A - 6D, the second treatment station 200 or molecular dissociation station comprises at least one reactor 201 provided with corresponding inlets 203, 205 for the solid fraction Fs and gaseous fraction Fg, respectively, said reactor being adapted to perform at least two treatment stages, namely a first stage S1 for the solid fraction Fs and a second stage S2 for the gaseous fraction Fg.

At the first treatment stage S1 of the reactor 201 of the molecular dissociation station 200, according to the invention, the solid fraction Fs produced by the first treatment station or dehydration station 100 is turned into a gaseous phase. In addition, still at this first treatment stage S1, a first dissociation of complex gaseous molecules, obtained from the transformation of the solid fraction Fs into a gaseous phase, into simple molecules takes place. In the illustrated embodiment, the temperature inside the reactor 201 at this first stage S1 is about 850°C.

In order to perform the first treatment stage S1, the reactor 201 comprises a check valve 207 for varying the thickness of the solid fraction Fs entering the reactor 201 of the molecular dissociation station 200. In the illustrated embodiment, the check valve 207 is a gate valve, preferably a knife gate valve with adjustable frequency in order to vary the thickness of the solid fraction Fs. In the illustrated embodiment, the reactor 201 is a vertical axis cylindrical reactor having a height of approximately 2 m and an outer diameter of approximately 1.5 m.

Preferably, the flow rate of the solid fraction Fs of the sludge at the inlet 203 of the molecular dissociation reactor 201 is about 500 kg/h.

According to the invention, the path of the solid fraction Fs inside the reactor 201 of the molecular dissociation station 200 is from top to bottom, i.e. from a first, upper end 201a of the reactor 201 to a second, lower end 201b of the reactor 201 in order to define a path for the solid fraction Fs in co-current with the gaseous fraction obtained from the dissociation of the solid fraction Fs of the sludge, by exploiting the force of gravity.

The reactor 201 of the molecular dissociation station 200 further comprises a gas feeding system 209 comprising a plurality of inlets 209a, 209b for feed gases G1, G2 for the reactor 201, such as, for example, carbon dioxide CO₂, oxygen O₂ and water in the form of vapor, or mixtures thereof. In the illustrated embodiment, the reactor 201 of the molecular dissociation station 200 is fed with a mixture of gases G1, G2 comprising CO₂, oxygen O₂ and water H₂O in the form of vapor.

In the illustrated embodiment, the gas feeding system 209 comprises two inlets 209a, 209b. In other embodiments, it may comprise more than two inlets, depending on the reactions to be obtained inside the reactor 201.

The reactor 201 of the molecular dissociation station 200 further comprises a gas distribution system 211 associated with the gas feeding system 209 at the inlet of the reactor 201 in order to distribute the feed gases G1, G2 inside the reactor 201. In the illustrated embodiment, both the gas feeding system 209 and the gas distribution system 211 are arranged close to the upper end 201a of the reactor 201, in order to guarantee the path in co-current for the solid fraction Fs and the gases entering the reactor 201.

The gas distribution system 211 comprises a housing 210 and at least one agitator 212 or mixer movable, particularly rotatable, relative to the housing 201, and driven by a corresponding electric motor 213 and provided with mixing means 215 adapted to mix gases coming from the gas feeding system 209 with the solid fraction Fs of the sludge entering the reactor 201. In the illustrated embodiment, the housing 201 has a cylindrical shape.

In the illustrated embodiment, the mixing means 215 comprise a plurality of first arms 215' distributed in an axial direction on the body 214 of the agitator or mixer 212 and extending radially relative to the body 214 of the agitator or mixer 212.

Advantageously, the first arms 215' of the agitator 212 are arranged in a sunburst pattern, offset relative to one another in order to define a plurality of reaction layers R1, R2, R3, R4, said layers being associated with the inlets 209a, 209b of the gas feeding system 209.

In the illustrated embodiment, the feed gases for the reactor 201 introduced through the gas feeding system 209 comprise carbon dioxide O₂, oxygen O₂ and water H₂O in the form of vapor, the percentages of which vary depending on the temperature and the reaction to be obtained in each reaction layer R1, R2, R3, R4.

In the illustrated embodiment, in at least one of the reaction layers R1, R2, R3, R4 the reaction C + CO₂ = 2CO is promoted, allowing increasing the porosity of the residual carbon of the solid fraction Fs in order to obtain a catalyst for the dissociation of the gaseous complex molecules resulting from the mixing carried out by the agitator 211.

Other reactions obtained in the reaction layers may be 2C+O₂=2CO, 2H₂O+2CO=2H₂+2CO₂.

Advantageously, in the illustrated embodiment, each first arm 215 of the agitator 212 is inclined by about 30° relative to a corresponding radial plane perpendicular to the body 214 of the agitator 21 for facilitating traveling of the solid fraction Fs downwards.

In addition, in the illustrated embodiment, both the body 214 and the first arms 215' of the movable agitator 212 are hollow, in order to allow the gases to flow into said body 214 and said arms 215'.

The first arms 215' of the agitator 212 further comprise openings 217 for the exit of the gases. In the illustrated embodiment, the openings 217 are oriented downwards, i.e. towards the lower end 201b of the molecular dissociation reactor 201. The openings 217 have a preferably circular shape and a diameter of about 3 mm. In addition, the openings 217 are arranged in one or more rows on respective first arms 215'.

The gas distribution system 211 further comprises a plurality of second arms 216 stationary with respect to the housing 210 and arranged at three levels L1, L2, L3 in the illustrated embodiment. Each level L1, L2, L3 defined by the second stationary arms 216 is provided with a corresponding inlet nozzle 218 for the entry of the feed gases G1, G2 coming from the gas feeding system 209.

In the illustrated embodiment, each level L1, L2, L3 comprises two stationary arms 216 associated with a single inlet nozzle 218 by means of an annular connector 220.

In addition, the second stationary arms 216 are arranged offset relative to the first arms 215' of the movable agitator 212.

The stationary arms 216 in turn comprise openings 217 for the exit of gases, said openings being oriented downwards and arranged in rows on said stationary arms 216. The openings 217 are preferably circular and have a diameter of about 3 mm.

The agitator 212 or mixer further comprises adjusting means for adjusting the speed of rotation to avoid areas of accumulation of the solid fraction Fs and obtain an optimal mixture as a result of the mixing of the solid fraction Fs with the gases entering the reactor 201.

The reactor 201 of the molecular dissociation station 200 further comprises first breaking means 219 for breaking the carbonaceous particles of the solid fraction Fs that have not been gasified at the first treatment stage S1. Considering that the reactor 201 of the molecular dissociation station 200 is configured to guarantee a path in co-current for the solid fraction Fs and the gaseous fraction obtained from the dissociation of the solid fraction Fs at the first treatment stage S1, the first breaking means 219 are located under the gas distribution system 211.

In the illustrated embodiment, the first breaking means comprise first grid 219 comprising at least one mobile grid 211 moved by a corresponding motor 222 and at least one fixed grid 223.

The fixed grid 223 has a mesh size of about 5 mm and is surmounted by first heat storage means 225 until a temperature of about 750° comprising a plurality of first iron spherical beads. In the illustrated embodiment, the spherical beads 225 have a diameter between 25 mm and 35 mm, preferably of 30 mm, for allowing passage of particles smaller than 5 mm.

The mobile grid 221 is adapted to break the carbonaceous particles of the solid fraction Fs that have not yet been gasified at the first treatment stage S1. The mobile grid 221 is adapted to move the first spherical beads 225 at predetermined time intervals in order to obtain breakage of carbonaceous particles having a size larger than 5 mm.

In the illustrated embodiment, the first spherical beads 225 are arranged in layers on the fixed grid 223. In addition, the overall thickness of the layers of first spherical beads 225 is sized so as to obtain, as a result of the movement of the mobile grid, optimal stirring and breakage of the carbonaceous matter. Therefore, the overall thickness of the layers of first spherical beads 225 will be between 50 mm and 70 mm, preferably 60 mm.

At the second treatment stage S2 of the molecular dissociation station 200, dissociation of the residual chains deriving from the first treatment stage S1 takes place in the presence of catalyst elements, such as for example the carbon particles exiting the first grids 219. In the illustrated embodiment, the reaction temperature at this second treatment stage S2 is about 850°C.

In order to carry out the dissociation of the residual chains at the second treatment stage S2, the reactor 201 of the molecular dissociation station 200 comprises an inlet 227 for introducing gases G3 necessary for the reaction, such as oxygen O₂ and water H₂O in the form of vapor. In addition, the reactor 201 comprises a corresponding inlet 205 for the gaseous fraction Fg of the wastewater sludge obtained from the filtration carried out by the dehydration station 100. The gaseous fraction Fg deriving from the dehydration station 100 consists of carbon dioxide CO₂ in a proportion of 75% and the remaining 25% part consists of carbon monoxide CO, methane CH₄ and hydrogen H₂.

The reactor 201 of the molecular dissociation station 200 comprises second breaking means 231 arranged lower than the inlets 205, 227 provided in the reactor 201 for introducing the gases G3, Fg for the reaction of the second treatment stage S2.

The second breaking means comprise second grids 231 comprising at least one mobile grid 223 moved by a corresponding motor 232 and at least one fixed grid 235.

In the illustrated embodiment, the fixed grid 235 has a mesh size of about 3 mm to allow passage of particles smaller than 3 mm. In addition, the fixed grid 235 is surmounted by second heat storage means 237 until a temperature of about 850°C comprising a plurality of second iron spherical beads. In the illustrated embodiment, the second spherical beads 237 have a diameter between 75 mm and 85 mm, preferably of 80 mm, to allow passage of particles smaller than 3 mm. The second spherical beads 237, in the illustrated embodiment, are arranged in four layers on the fixed grid 233. The overall thickness of the layers of the second spherical beads 237 will be between 150 mm and 160 mm.

The mobile grid 233 moved by the motor 232 is adapted to move the second spherical beads 237 to obtain breakage of the particles of inert gases agglomerated at the second treatment stage S2 and having a size larger than 3 mm.

The reactor 201 of the molecular dissociation station 200 further comprises a purification system 239 for the purification of the gases exiting the second treatment stage S2 for separating gases from ashes. In the illustrated embodiment, the purification system 239 comprises a plurality of cyclones 239a, 239b, located close to the lower end 201b of the reactor 201. The reactor 201 is further provided with an outlet 241 for the ashes coming from the purification operation performed by the cyclones 239a, 239b as well as with a collector 243 intended for collecting the ashes and located at the lower end 201b of the reactor 201.

The reactor 201 further comprises an outlet 245 for the mixture of gases Gu obtained from the treatment performed at the second treatment stage S2. The mixture of gases Gu exiting the molecular dissociation station 200 consists of carbon monoxide CO, carbon dioxide CO₂, hydrogen H₂ and water H₂O in the form of vapor.

In order to ensure proper operation of the sludge treatment plant 10, the mixture of gases Gu exiting the molecular dissociation station 200 must be clean in a proportion of about 99%. To this aim, the molecular dissociation station 200 comprises a treatment sub-station 200' or finishing station for the mixture of gases Gu exiting the molecular dissociation station 200.

Preferably, the finishing station 200' comprises a settling chamber inside which homogenization of the mixture of gases Gu coming from the molecular dissociation station 200 as well completion of the reaction times takes place. More preferably, the finishing station 200' comprises one or more dissociation reactors inside which the dissociation of complex molecules takes place by using commercially available catalysts operating at a temperature between 800°C e 900°C, more preferably at a temperature of about 850°C. In a preferred embodiment, the finishing station 200' comprises a first dissociation reactor inside which dissociation of complex gaseous molecules takes place by means of an alumina-based catalyst. Considering that the catalytic activity of the catalyst may decrease over time as a result of coke deposit, the finishing station 200' comprises a second dissociation reactor arranged in parallel to the first reactor in order to operate in batch mode. In addition, the finishing station comprises a final reactor with a nickel-alumina-based catalyst.

The sludge treatment plant 10 further comprises a third treatment station 300 or balancing station comprising at least one balancing reactor 201 which allows control of the ratio between the components hydrogen H₂ and carbon monoxide CO contained in the mixture of gases Gu subjected to the finishing treatment.

In the illustrated embodiment, the operation of the balancing station 300 is based on the use of water H₂O vapor according to the water-gas shift reaction, or Dussan reaction, or "wgs" reaction: CO + H₂O = H₂ + CO₂ which allows obtaining hydrogen H₂ and carbon dioxide CO₂.

According to a preferred embodiment of the invention, the balancing station 300 comprises a first balancing reactor inside which the first balancing stage takes place, said first balancing reactor operating at a temperature between 330°C and 400°C, by using a ferrochromium-based catalyst, free of hexavalent chromium.

The balancing station 300 further comprises a second balancing reactor inside which control of the ratio between hydrogen and carbon monoxide takes place by using a catalyst based on copper, zinc and alumina and the temperature is lowered by means of a heat exchanger until it reaches about 180°C and 250°C.

The balancing station 300 further comprises detection means arranged at the entry of the first balancing reactor and at the exit of the second reactor for the treated mixture of gases. The detection means can detect parameters relating to the gases contained in said mixture, such as carbon monoxide, carbon dioxide, hydrogen and water. The detection means cooperate with an analyzing device configured to process the parameters detected by said detection means and transmit control signals for adjusting and/or varying the flow rates of the gases entering the first balancing reactor, the temperature at the exit of the first and second stage of the molecular dissociation reactor.

When the plant according to the invention is used for obtaining liquid methane from sludge treatment, the balancing station 300 performs control of the ratio between carbon monoxide and hydrogen in order to promote the methanation reaction.

When the plant according to the invention is used for obtaining gaseous hydrogen from sludge treatment, the function of the balancing station 300 is to minimize the presence of carbon monoxide and maximize the formation of CO₂. At the end of said operation, a percentage of gaseous hydrogen containing impurities lower than 10% of the obtained hydrogen is obtained.

The sludge treatment plant further comprises a fourth treatment station or separation station 400, arranged in series downstream of the balancing station 300 and adapted to receive the mixture of gases derived from the balancing station 300, in order to separate the CO2 component to obtain a mixture of gases essentially consisting only of carbon monoxide and hydrogen. The separation of the carbon dioxide takes place with known means and methods.

The sludge treatment plant 10 may further comprise a fifth treatment station 500 or liquefaction station intended for the liquefaction of the carbon dioxide component and arranged downstream of the separation station 400 for the separation of the carbon dioxide component. The liquefaction station receives the carbon dioxide component and comprises appropriate known systems for obtaining liquefaction of said component G_{CO2} and subsequently storing the same in a dedicated tank 450.

The plant 10 according to the invention in the case in which the plant is used for obtaining liquid methane or biomethane from sludge treatment will be described below.

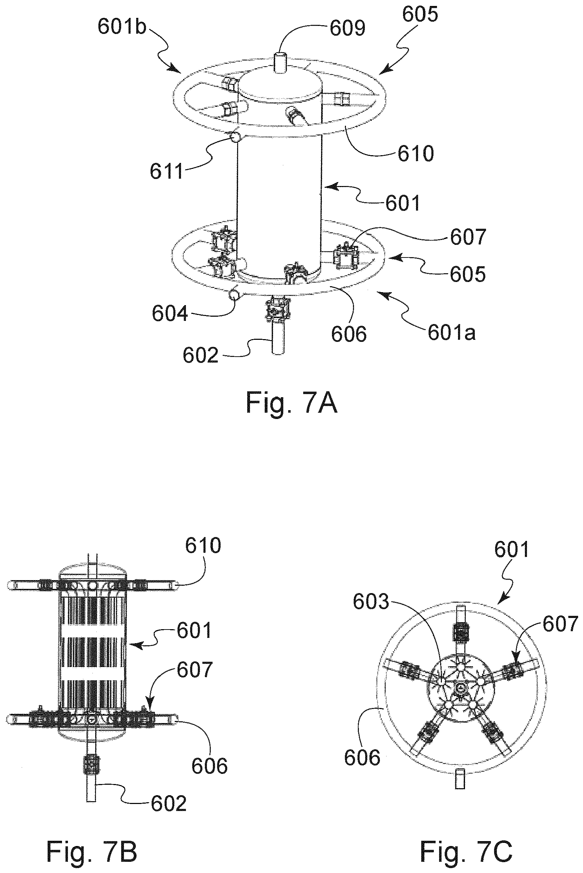

Advantageously, the plant 10 according to the invention comprises a sixth treatment station 600 or methanation station arranged downstream of the carbon dioxide component separation station 400. The methanation station comprises at least one methanation reactor 601, shown in Figs. 7A - 7C, having an inlet 602 adapted to receive the mixture of gases obtained from the separation of the carbon dioxide CO₂ component and subject said mixture of gases to a methanation process in order to obtain methane in the form of gas. According to the invention, the obtainment of methane in the form of gas inside the methanation reactor 601 is based on the exothermic Sabatier reaction: CO + 3H₂ = CH₄ + 2H₂O.

According to the invention, the methanation reactor 601 comprises a plurality of heat exchangers 603. In the illustrated embodiment, the heat exchangers 603 are arranged preferably in a circle around a longitudinal axis of said reactor 601. The heat exchangers 601 comprise finned tubes and extend longitudinally from a first end 601a towards a second end 601b of the methanation reactor 601. In the illustrated embodiment, the heat transfer exchange medium inside the heat exchangers is water H₂O.

The methanation reactor 601 further comprises a feeding system 605 for feeding the heat exchange medium to the plurality of heat exchangers 603. In the illustrated embodiment, the feeding system 605 comprises a first annular collector 606 provided at the lower end 601a of the methanation reactor 601 and has an inlet 604 for the heat exchange medium. Furthermore, the feeding system 605 comprises adjusting means 607, such as, for example, valves, for adjusting the flow rate of the heat exchange medium at the inlet of the heat exchangers 603.

In the illustrated embodiment, the pressure inside the methanation reactor 601 is about 10 bar.

According to the invention, the reaction takes place from bottom to top of the methanation reactor 601 when said reactor is in its operating configuration in the plant 10.

More preferably, the reaction inside the methanation reactor takes place in two steps:
- a first step F1 taking place in the lower part of the reactor 601 in the presence of a first catalyst based on nickel alumina and rare metals and operating at a temperature of about250°C;
- a second step F2 following the first step and taking place in the upper part of the reactor in the presence of a second catalyst, also based on nickel alumina and rare metals, said second catalyst operating at a temperature of about 450°C.

The methanation reactor 601 further comprises detection means or sensors, preferably arranged in the upper part of the reactor 601, for detecting parameters relating to the temperature of the heat exchange medium at the exit from the reactor 601 and for transmitting a control signal to the heat exchange medium flow rate adjusting means 607 provided in the lower part of the reactor 601, to adjust the flow rate of the heat exchange medium entering the reactor.

The methanation reactor 601 further comprises two outlets 609, 611, namely a first outlet 609 for a mixture of gases Gm consisting of methane CH₄ and water H₂O in the form of vapor, and a second outlet 611 for overheated vapor, obtained from the methanation reaction. In the illustrated embodiment, the second outlet 611 is associated with a second annular collector 610 arranged at the second end 601b, i.e. at the outlet of the methanation reactor 601 arranged on top of the reactor 601 when said reactor is in its operating configuration.

Preferably, said mixture of gases Gm exiting the methanation reactor 601 will be sent to a corresponding heat exchanger 650 in order to recover the heat of the water vapor, which will subsequently be condensed in order to obtain hot water. The obtained hot water may be stored in an appropriate tank 660 and possibly be reused in the other stations of the plant 10. The methane contained in said mixture Gm will subsequently be subjected to a liquefaction process by means of known means and methods in order to obtain liquid methane G_{CH4}, which will be suitably stored in a dedicated tank 670. The overheated vapor of the second outlet 611 will be subjected to a further overheating process by means of appropriate heat exchangers.

The reactor 601 is fed with water at a temperature of about 250°C and a pressure of about 45 bar. The water, here used as a heat exchange medium for the heat exchangers 603, enters the reactor through the inlet 604 of the annular collector 606 arranged at the lower end 601a of the reactor 601.

The mixture coming from the separation station 400 for the separation of the carbon dioxide component and essentially consisting of carbon monoxide and hydrogen is sent to the inlet 602 of the reactor.

According to the invention, a first reaction with a first catalyst based on nickel alumina and rare metals and operating at a temperature of about 250°C takes place in the lower part of the reactor 601, and a second reaction with a second catalyst based on nickel alumina and rare metals and operating at a temperature of about 450°C takes place in the upper part of the reactor 601.

The sludge treatment plant according to the invention may comprise a seventh treatment station or liquefaction station, arranged downstream of the methanation station 600, in order to liquefy the methane obtained in the methanation station 600. Preferably, the liquefaction of methane takes place by means of methods and means known to a person skilled in the art.

The sludge treatment plant 10 further comprises a plurality of heat exchangers and suitable compressors arranged between the various stations of the plant 10 in order to bring the treated mixture of gases to the temperature and pressure values required by each individual treatment station in order to facilitate proper operation of the plant 10.

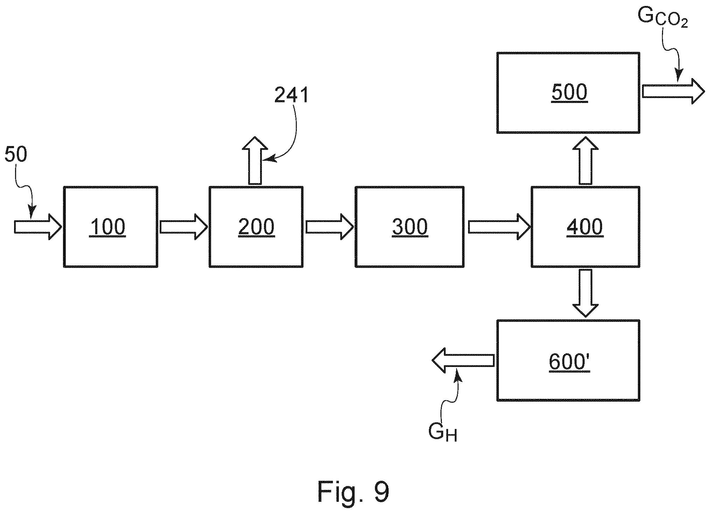

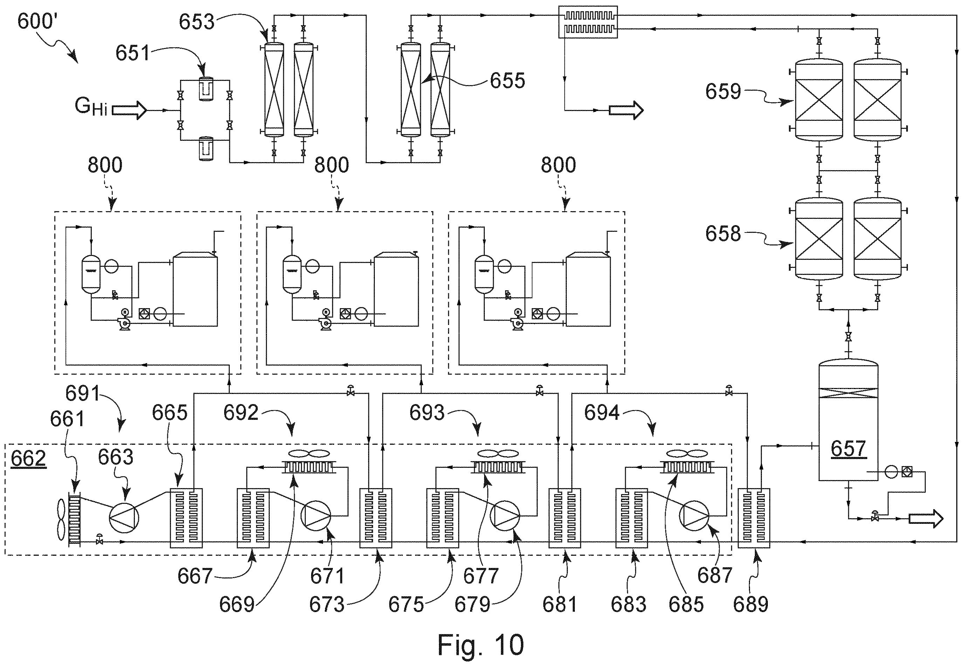

Referring to Figures 9 and 10, the stations of the plant 10 according to a second embodiment of the invention in which the plant 10 is used for obtaining gaseous hydrogen will be described below.

According to this second embodiment, the first stations of the plant, i.e. the stations up to and including the fifth station 400 for separating carbon dioxide CO₂, are essentially the same as those previously described. The part of the plant 10 downstream of the separation station 400 for the separation of carbon dioxide will be described below.

Advantageously, when the plant 10 according to the invention is used for obtaining gaseous hydrogen G_{H}, the sixth treatment is a purification station 600' arranged downstream of the carbon dioxide component separation station 400. The purification station 600' is adapted to purify the component or flow of hydrogen which contains a percentage of about 10% of impurities when exiting the carbon dioxide component separation station 400. The impurities present in the hydrogen flow are: water H₂O and nitrogen N₂.

In the illustrated embodiment, the separation of impurities from the flow of hydrogen takes place in several stages. To this aim, in the purification station 600' there is provided a first filtration zone for separating possible traces of solids and for separating the traces of water vapor and carbon dioxide. The purification station 600' comprises first filters 651 for the traces of solids, second filters 653 made as molecular sieves for separating the traces of water vapor, and third filters 655 made as molecular sieves for separating the traces of carbon dioxide. In the illustrated embodiment, the first, second and third filters 651, 653, 655 are arranged in series, whereby the mixture containing hydrogen and impurities when entering the purification station 600' passes through said filters 651, 653, 655 in a cascade manner.

After separation of water and carbon dioxide, the purification station 600' has a zone for separating traces of other pollutants such as, for example, nitrogen, oxygen and methane. For this purpose, the purification station 600' comprises a demister 657 for demisting the liquid phase by cooling the mixture of gases to a temperature of about -180°C, preferably of-178°C.

In the illustrated embodiment, the cooling down of the mixture of gases to the temperature of -178°C takes place by means of a series of heat exchangers arranged in cascade upstream of the demister 657 in order to form a succession of cooling stages in order to reach increasingly lower temperatures from one stage to another, until a final temperature of -195°C is reached, which will then allow to liquefy by cooling the mixture of gas impurities entering the demister 657.

In the illustrated embodiment, a succession of four cooling stages is provided. To this aim, the purification station 600' for the purification of the hydrogen flow comprises a refrigerating unit 662 comprising in turn a plurality of heat exchangers adapted to perform the succession of cooling stages arranged in cascade in order to provide the low temperature inside a heat exchanger 689 upstream of the demister 657.

In the illustrated embodiment, the refrigerating unit 662 comprises in turn:
- a first group of heat exchangers 691 comprising a gas-air heat exchanger 661, a chiller-type compressor 663 and a heat exchanger 665 using a refrigerating gas R448A, said heat exchangers being arranged in series in order to perform a first cooling down to a temperature of -30°C;
- a second group of heat exchangers 692 comprising an exchanger 667 using ethylene as a refrigerating medium, a gas-air exchanger 669 arranged downstream of the ethylene exchanger 667, a chiller-type compressor 671 and an interface exchanger 673 located between the second group of heat exchangers 692 and a third group of heat exchangers 693, in order to obtain a further cooling down to a temperature of - 95°C;
- a third group of heat exchangers 693 comprising a heat exchanger 675 using methane as a refrigerating medium, a gas-air exchanger 677 arranged downstream of the methane exchanger 675, a chiller-type compressor 679 and an interface exchanger 681 located between the third group of heat exchangers 693 and a fourth group of heat exchangers 694, in order to obtain a further cooling down to a temperature of - 155°C;
- a fourth group of heat exchangers 694 comprising a heat exchanger 683 using nitrogen as a refrigerating medium, a gas-air exchanger 685, a chiller-type compressor 687 and an interface exchanger 689 or final exchanger located between the fourth group of heat exchangers 694 and the demister 657, in order to obtain a further cooling down to a temperature of -195°C.

The final heat exchanger 689 allows to cool down the mixture of gases at the inlet of the demister 657 to a temperature of -178°C.

In the illustrated embodiment, for each cooling stage the purification station 600' comprises a safety system against overpressures caused by possible stops or malfunctions of the plant. The safety system is made with known means and systems.

At the outlet of the demister 657 the purification station comprises a second filtration zone for the remaining traces of impurities. The traces of impurities remaining in the flow of hydrogen exiting the demister 657 are separated by absorption on activated carbon filters 658 and silica gel packed beds 659.

After the removal of impurities, the pure hydrogen is stored in high pressure cylinders.

The invention as described is susceptible to several modifications and variations falling within the same inventive principle.

## Claims

1. A sludge treatment plant (10) comprising:
- a first treatment station (100) having an inlet for the sludge coming from a source (50), said first station comprising at least one hydrothermal carbonization reactor (101) provided with an inlet (101a) for the sludge (50) and comprising a first tube (110) for the circulation of liquid, a second tube (120) for the circulation of said sludge (50), and a set of rotary blades (130), and a filtration unit having an inlet for the sludge (Fi) coming from said reactor (101), said filtration unit comprising filtration means (105) for the separation of said sludge (Fi) into a solid fraction (Fs), a liquid fraction (Fl) and a gaseous fraction (Fg) and having respective outlets (112, 113, 116) for said fractions (Fs, Fl, Fg);
wherein there is provided a second treatment station (200), or molecular dissociation station, comprising at least one reactor (201) having corresponding inlets (203, 205) for said solid (Fs) and gaseous (Fg) fractions obtained from the treatment in the first station (100), respectively, and an outlet (245) for a mixture of gases (Gu) obtained from the treatment performed by said reactor (201),
wherein said inlet (203) for said solid fraction (Fs) is arranged proximal to a first end (201a) of the reactor (201), and wherein said inlet (205) for the gaseous fraction (Fg) is arranged distal to said first end (201a) of the reactor (201) in such a way as to define a path for the solid fraction (Fs) in co-current with a gaseous fraction obtained from the dissociation of said solid fraction (Fs), wherein said reactor (201) comprises a gas feeding system (209) having respective inlets (209a, 209b) for feeding gases (G1, G2, G3) to the reactor (201), a gas distribution system (211) associated with said gas feeding system (209) and having mixing means (215) for mixing said gases (G1, G2, G3) with said solid fraction (Fs), first breaking means (291) and second breaking means (231) comprising grids (221, 233; 223, 235) and heat storage means (225, 237) for performing a treatment of gasification of the molecules of the solid fraction (Fs).

2. The plant (10) according to claim 1, wherein said gas distribution system (211) comprises a housing (210) comprising, in turn:
- at least one agitator (212) or rotary mixer, driven by a corresponding electric motor (213), and wherein said mixing means (215) comprise a plurality of first arms (215') distributed in the axial direction on the body (214) of the agitator or mixer (212), said first arms extending radially relative to the body (214) of said agitator or mixer (212) and defining a plurality of reaction layers (R1, R2, R3, R4); and
- a plurality of second arms (216) stationary with respect to the housing (210) of the gas distribution system (211), said second arms being arranged at levels (L1, L2, L3) and associated with a corresponding inlet nozzle (218) for the entry of feed gases (G1, G2) coming from the gas feeding system (209).

3. The plant (10) according to claim 2, wherein said mixing means (215) are arranged inclined relative to a corresponding radial plane perpendicular to the body (214) of the agitator (212) for facilitating traveling of the solid fraction downwards and comprise opening (217) for the exit of gases.

4. The plant (10) according to any of the preceding claims, wherein said first breaking means (219) and second breaking means (231) comprise first and second grids, each of said first and second grids comprising in turn at least one mobile grid (221, 233) and at least one fixed grid (223, 235) surmounted by first and second heat storage means (225, 237), respectively, wherein said mobile grid (221, 223) is associated with a corresponding motor (222, 232) adapted to move said mobile grid (221, 223) in order to move said heat storage means (225, 237) to obtain dissociation and stirring of the particles of the mixture obtained from the mixing performed by the agitator (212).

5. The plant (10) according to any of the preceding claims, wherein said filtration unit (102) comprises a filter press comprising a main body (110) having an inlet (111) for the amount of sludge (Fi) coming from the hydrothermal carbonization reactor (101), wherein said filtration means (105) comprise a thrust piston (114) and a plurality of stainless steel lamellas (115) housed in said body (110), wherein said filter press (102) is further provided with corresponding outlets (112, 113, 116) for said solid (Fs), liquid (Fl) and gaseous (Fg) fractions obtained from separation, wherein the flows (Fi) in said inlet (111) and said outlets (112, 113) are adjusted by means of appropriate flow rate adjustment members (103, 107, 108).

6. The plant (10) according to any of the preceding claims, comprising a third treatment station, or balancing station (300), downstream of said molecular dissociation station (200), for controlling the ratio between hydrogen and carbon monoxide contained in the mixture of gases (Gu) exiting said molecular dissociation station (200), said third treatment station comprising a first balancing reactor inside which a first balancing stage by means of a first catalyst operating at a temperature between 330°C and 400°C takes place, and a second balancing reactor inside which a second balancing stage by means of a second catalyst operating at a temperature between 180°C and 250°C takes place.

7. The plant (10) according to claim 6, wherein said plant (10) comprises a sixth treatment station or methanation station (600) arranged downstream of a separation station (400) intended for separating the carbon dioxide component, said sixth treatment station comprising at least one methanation reactor (601) comprising in turn a plurality of heat exchangers (603), a feeding system (605) for feeding the plurality of heat exchangers (603) with a heat exchange medium, said feeding system being further provided with outlets (609, 611) for a methane-containing mixture of gases (Gm) and for overheated vapor that are obtained from the methanation reaction, respectively.

8. The plant (10) according to claim 7, wherein said feeding system (605) comprises at least one annular collector (606, 610) provided at the end (601a, 601b) of the methanation reactor (601) and detection means or sensors for detecting parameters relating to the temperature of the heat exchange medium exiting the reactor (601) and for transmitting a control signal to heat exchange medium flow rate adjusting means (607) provided in the lower part of the reactor (601) to adjust the flow rate of the heat exchange medium entering the reactor (601).

9. The plant (10) according to claim 6, wherein said plant (10) comprises a sixth treatment station or purification station (600') arranged downstream of the separation station (400) intended for separating the carbon dioxide component, said sixth station comprising:
- a first filtration zone in which filters (651, 653, 655) are provided for separating traces of impurities such as water and carbon dioxide from a hydrogen flow (G_{Hi}) obtained from separation of the carbon dioxide component in a separation station (400) arranged downstream of the balancing station (300);
- a heat exchanger (689) operating at low temperature, in which the hydrogen flow (G_{Hi}) is cooled down to a temperature of about -180°C;
- a demister (657) which is arranged downstream of said heat exchanger (689) and in which traces of impurities such as nitrogen, oxygen and methane are separated;
- a second filtration zone comprising filters (658,659) in which further traces of impurities remaining in the flow of gases exiting the demister (657) are separated.

10. The plant (10) according to claim 9, wherein the purification station (600') further comprises a refrigerating unit (662) comprising a plurality of heat exchangers adapted to perform a series of cascade cooling stages in order to provide said low temperature inside the heat exchanger (689) arranged upstream of the demister (657), wherein said cooling stages comprise:
- a first stage providing a cooling down to a temperature of -30°C;
- a second stage providing a further cooling down to a temperature -95°C;
- a third stage providing a further cooling down to a temperature of -155°C;
- a fourth stage providing a final cooling down to a temperature of -195C.

11. The plant (10) according to claim 10, wherein, in order to perform said cooling stages, the refrigerating unit (662) comprises:
- a first group of heat exchangers (691) comprising a gas-air heat exchanger (661), a chiller-type compressor (663) and a heat exchanger (665) using a refrigerating gas R448A, said heat exchangers being arranged in series in order to perform said first cooling stage;
- a second group of heat exchangers (692) comprising an exchanger (667) using ethylene as a refrigerating medium, a gas-air exchanger (669) arranged downstream of the ethylene exchanger (667), a chiller-type compressor (671) and an interface exchanger (673) located between the second group of heat exchangers (692) and a third group of heat exchangers (693), in order to obtain a further cooling down to a temperature of -95°C;
- a third group of heat exchangers (693) comprising a heat exchanger (675) using methane as a refrigerating medium, a gas-air exchanger (677) arranged downstream of the methane exchanger (675), a chiller-type compressor (679) and an interface exchanger (681) located between the third group of heat exchangers (693) and a fourth group of heat exchangers (694), in order to obtain a further cooling down to a temperature of -155°C;
- a fourth group of heat exchangers (694) comprising a heat exchanger (683) using nitrogen as a refrigerating medium, a gas-air exchanger (685), a chiller-type compressor (687) and an interface exchanger (689) or final exchanger located between the fourth group of heat exchangers (694) and the demister (657), in order to obtain a further cooling down to a temperature of -195°C.

12. The plant (10) according to any of the preceding claims, wherein said feed gases (G1, G2) coming from the gas feeding system (209) comprise carbon dioxide CO₂, oxygen O₂ and water H₂O in the form of vapor, or mixtures thereof.

13. A method for sludge treatment, comprising the steps of:
- in a first treatment station (100) or dehydration station comprising at least one hydrothermal carbonization reactor (101), subjecting the sludge coming from a sludge source (50) to a thermochemical treatment under predetermined temperature and pressure conditions and in the presence of liquid air;
- subjecting the sludge exiting the carbonization reactor (101) to a filtration step in a filtration unit arranged downstream of the hydrothermal carbonization reactor (101) in such a way as to separate the sludge into a solid fraction (Fs), a liquid fraction (Fl) and a gaseous fraction (Fg), said filtration unit being provided with corresponding outlets (112, 113, 116) for said fractions (Fs, Fl, Fg);
- subjecting said solid fraction (Fs) and said gaseous fraction (Fg) to a molecular dissociation treatment in a second treatment station (200), or molecular dissociation station, comprising at least one reactor (201) provided with corresponding inlets (203, 205) for said solid fraction (Fs) and said gaseous fraction (Fg) as well as with an outlet (245) for a mixture of gases (Gu) obtained from the treatment performed by said reactor (201), wherein said inlet (203) for said solid fraction (Fs) is arranged proximal to a first end (201a) of the reactor (201), and wherein said inlet (205) for the gaseous fraction (Fg) is arranged distal to said first end (201a) of the reaction (201) in such a way as to define a path for the solid fraction (Fs) in co-current with a gaseous fraction obtained from the dissociation of said solid fraction (Fs);
- providing feed gases (G1, G2) through a gas feeding system (209) of the reactor (201) of the second treatment station (200), said gas feeding system being provided with corresponding inlets (209a, 209b) for said feed gases (G1, G2);
- mixing said feed gases (G1, G2) with said solid fraction (Fs) by means of a gas distribution system (211) associated with said gas feeding system (209) and provided with mixing means (215);
- performing a treatment of gasification of the molecules of the solid fraction (Fs) by means of first breaking means (219) and second breaking means (231) comprising grids (221, 233; 223, 235) and heat storage means (225, 237).

14. The method according to claim 13, further comprising the steps of:
- subjecting said mixture of gases (Gu) exiting said molecular dissociation station (300) to a controlling step in a third treatment station, or balancing station (300), arranged downstream of said molecular dissociation station (200), for controlling the ratio between hydrogen and carbon monoxide contained in the mixture of gases (Gu), wherein said balancing station (300) comprises a first balancing reactor inside which a first balancing stage by means of a first catalyst operating at a temperature between 330°C and 400°C takes place, and a second balancing reactor inside which a second balancing stage by means of a second catalyst operating at a temperature between 180°C and 250°C takes place;
- subjecting the mixture of gases exiting the balancing station (300) to a step of separating the carbon dioxide CO₂ component in a fourth treatment station or separation station (400) in order to obtain a mixture of gases essentially consisting of carbon monoxide and hydrogen;
- subjecting the mixture of gases containing carbon monoxide and hydrogen to a methanation step in a sixth treatment station or methanation station (600) arranged downstream of the separation station (400) and comprising at least one methanation reactor (601) comprising in turn a plurality of heat exchangers (603), a feeding system (605) for feeding the plurality of heat exchangers (603) with a heat exchange medium, said feeding system being further provided with outlets (609, 611) for a methane-containing mixture of gases (Gm) and for overheated vapor that are obtained from the methanation reaction, respectively.

15. The method according to claim 13, further comprising the steps of:
- subjecting said mixture of gases (Gu) exiting said molecular dissociation station (300) to a controlling step in a third treatment station, or balancing station (300), arranged downstream of said molecular dissociation station (200), for controlling the ratio between hydrogen and carbon monoxide contained in the mixture of gases (Gu), wherein said balancing station (300) comprises a first balancing reactor inside which a first balancing stage by means of a first catalyst operating at a temperature between 330°C and 400°C takes place, and a second balancing reactor inside which a second balancing stage by means of a second catalyst operating at a temperature between 180°C and 250°C takes place;
- subjecting the mixture of gases exiting the balancing station (300) to a step of separation of the carbon dioxide CO₂ component in a fourth treatment station or separation station (400) in order to obtain a mixture of gases mainly consisting of hydrogen (G_{Hi});
- subjecting the hydrogen-containing mixture of gases (G_{Hi}) to a purification step in a sixth station or purification station (600') arranged downstream of the separation station (400), said separation step providing the steps of:
- subjecting said hydrogen-containing mixture of gases (G_{Hi}) to a first filtration step in a first filtration zone comprising filters (651, 653, 655) for separating traces of impurities such as water and carbon dioxide from the hydrogen flow (G_{Hi});
- cooling down the hydrogen flow (G_{Hi}) to a temperature of about -180°C in a heat exchanger (689) operating at low temperature;
- separating traces of impurities such as nitrogen, oxygen and methane from the hydrogen flow (G_{Hi}) by means of a demister (657) arranged downstream of said heat exchanger (689);
- subjecting the hydrogen flow (G_{Hi}) to a second filtration step in a second filtration zone comprising filters (658,659) for separating further traces of impurities left in the gas flow exiting the demister (657);
- subjecting the hydrogen flow (G_{Hi}) to a series of cascade cooling stages by using a refrigerating unit (662) comprising a plurality of heat exchangers and arranged upstream of the heat exchanger (689) to provide said low temperature inside the heat exchanger, and wherein said cooling stages provide for:
- performing a first step providing a cooling down to a temperature of -30°C by means of a first group of heat exchangers (691) arranged in series and comprising a gas-air heat exchanger (661), a chiller-type compressor (663) and a heat exchanger (665) using a refrigerating gas R448A;
- performing a second step providing a further cooling down to a temperature of -95°C by means of a second group of heat exchangers (692) comprising an exchanger (667) using ethylene as a refrigerating medium, a gas-air exchange (669) arranged downstream of the ethylene exchanger (667), a chiller-type compressor (671), and an interface exchanger (673) between the second group of heat exchangers (692) and a third group of heat exchangers (693);
- performing a third step providing a further cooling down to a temperature of -155°C by means of third group of heat exchangers (693) comprising a heat exchanger (675) using methane as a refrigerating medium, a gas-air exchanger (677) arranged downstream of the methane exchanger (675), a chiller-type compressor (679) and an interface exchanger (681) between the third group of heat exchangers (693) and a fourth group of heat exchangers (694);
- performing a fourth step providing a final cooling down to a temperature of -195C by means of a fourth group of heat exchangers (694) comprising a heat exchanger (683) using nitrogen as a refrigerating medium, a gas-air exchanger (685), a chiller-type compressor (687) and an interface exchanger (689) or final exchanger arranged between the fourth group of heat exchangers (694) and the demister (657).
